# EUROPÄISCHE PATENTSCHRIFT

(11) **EP 3 543 060 B1**
(45) Veröffentlichungstag und Bekanntmachung des Hinweises auf die Patenterteilung: **21.07.2021**
(21) Anmeldenummer: 19160557.5
(22) Anmeldetag: 04.03.2019
(51) Int. Cl.: B60K 35/00, B62D 15/02

(54) **VERFAHREN ZUM ANZEIGEN VON DEN BETRIEB EINES FAHRZEUGS BETREFFENDE INFORMATIONEN UND ANZEIGESYSTEM**
METHOD FOR DISPLAYING INFORMATION RELATING TO THE OPERATION OF A VEHICLE AND DISPLAY SYSTEM
PROCÉDÉ D'AFFICHAGE DES INFORMATIONS CONCERNANT LE FONCTIONNEMENT D'UN VÉHICULE ET SYSTÈME D'AFFICHAGE

(30) Priorität: 22.03.2018 DE 102018204409
(43) Veröffentlichungstag der Anmeldung: 25.09.2019
(73) Patentinhaber: VOLKSWAGEN AKTIENGESELLSCHAFT, 38440 Wolfsburg (DE)
(72) Erfinder: Hofmann, Martin, 38165 Lehre (DE); Peukert, Matthias, 38106 Braunschweig (DE); Schriever, David, 38176 Wendeburg (DE); Cengil, Sükrü, 30938 Burgwedel (DE)

(56) Entgegenhaltungen:
- DE-A1-102015 200 395
- DE-A1-102015 211 079
- DE-U1- 29 515 517
- JP-A- 2001 180 239
- JP-A- 2006 248 247
- US-A1- 2016 379 389

## Beschreibung

Die vorliegende Erfindung betrifft ein Verfahren zum Anzeigen von den Betrieb eines Fahrzeugs betreffende Informationen mittels einer Anzeigevorrichtung in einem Fahrzeug. Das Fahrzeug umfasst eine Lenkung, welche einen Lenkwinkel von zumindest einem lenkenden Fahrzeugrad steuert. Bei dem Verfahren wird der momentane Lenkwinkel der Lenkung des Fahrzeugs erfasst. Ferner betrifft die Erfindung ein Anzeigesystem zum Anzeigen von den Betrieb eines solchen Fahrzeugs betreffende Informationen. Das Anzeigesystem umfasst eine Anzeigevorrichtung und eine Lenkwinkelerfassungseinrichtung zum Erfassen des momentanen Lenkwinkels der Lenkung des Fahrzeugs. Die US 2016/379389 A1 zeigt ein solches Verfahren und ein entsprechendes System nach dem Stand der Technik.

Die Anzahl von Informationen, die einem Fahrer aufgrund der Vielzahl von Sensoren, Erfassungseinrichtungen und Komforteinrichtungen in einem Fahrzeug angezeigt werden, steigt ständig. Es können dem Fahrzeugführer Informationen zur Fahrzeugumgebung zur Verfügung gestellt werden. Hierfür sind beispielsweise Fahrerassistenzsysteme vorgesehen, welche den Fahrer dabei unterstützen, die Spur zu halten, nicht ohne Weiteres direkt wahrnehmbare Bereiche der Fahrzeugumgebung wahrzunehmen, und welche Warnungen zu Witterungsbedingungen und anderen Verkehrsteilnehmern ausgeben.

Die vielfältigen Informationen können auf verschiedenen Anzeigeflächen im Innenraum des Fahrzeugs wiedergegeben werden. Eine dieser Anzeigeflächen wird von einem so genannten Kombiinstrument bereitgestellt, welches nahe des primären Sichtfeldes des Fahrzeugführers angeordnet ist. In der Vergangenheit waren in diesem Kombiinstrument mechanische Rundinstrumente angeordnet, welche die Geschwindigkeit des Fahrzeugs und die Drehzahl des Motors des Fahrzeugs anzeigen. Es ist jedoch auch bekannt, alle Informationen, welche über das Kombiinstrument dargestellt werden sollen, mittels einer frei programmierbaren Anzeigefläche wiederzugeben. Auf dieser frei programmierbaren Anzeigefläche werden auch Darstellungen herkömmlicher analoger Rundinstrumente angezeigt. Daneben können jedoch auch Informationen beispielsweise eines Navigationssystems sowie weiterer Fahrerassistenzsysteme wiedergegeben werden. Hierfür ist die Anzeigefläche des Kombiinstruments in verschiedene Bereiche unterteilt. Die Darstellung von Informationen im Kombiinstrument des Fahrzeugs hat den Vorteil, dass der Fahrzeugführer zur Wahrnehmung der dargestellten Informationen seinen Blick nur geringfügig vom Fahrgeschehen abwenden muss.

Frei programmierbare Anzeigeflächen besitzen insbesondere den Vorteil, dass die dargestellten Informationen an das Bedürfnis des Fahrzeugführers insbesondere im Hinblick auf die Fahrsituation angepasst werden können. Aus der WO 2008/125694 A1 ist beispielsweise eine Anzeigeeinrichtung für ein Fahrzeug bekannt, bei der mittels einer Steuereinrichtung die Anzeigeeinrichtung so ansteuerbar ist, dass in einem ersten Anzeigemodus ein Rundinstrument dem Betrachter angezeigt wird, in einem zweiten Anzeigemodus dieses Rundinstrument hingegen nicht mehr angezeigt wird, jedoch die von dem Rundinstrument anzeigbare Information mittels einer digitalen Anzeige auf der Anzeigefläche wiedergegeben wird. Auf diese Weise ergibt sich auf der Anzeigefläche eine größere Fläche zum Anzeigen anderer Informationen.

Der vorliegenden Erfindung liegt die Aufgabe zugrunde, ein Verfahren und ein Anzeigesystem der eingangs genannten Art bereitzustellen, mit denen dem Fahrer Informationen zur Lenkung des Fahrzeugs bereitgestellt werden können.

Diese Aufgabe wird erfindungsgemäß durch ein Verfahren mit den Merkmalen des Anspruchs 1 und ein Anzeigesystem mit den Merkmalen des Anspruchs 7 gelöst. Vorteilhafte Ausgestaltungen und Weiterbildungen ergeben sich aus den abhängigen Ansprüchen.

Bei dem erfindungsgemäßen Verfahren wird ein erstes graphisches Objekt zur Darstellung des lenkenden Fahrzeugrades erzeugt, wobei unterschiedliche Lenkwinkel in dem ersten Graphikobjekt unterscheidbar dargestellt werden. Bei dem Verfahren wird das erste Graphikobjekt mit einer dem erfassten momentanen Lenkwinkel entsprechenden Darstellung des lenkenden Fahrzeugrades von der Anzeigevorrichtung angezeigt.

In Fahrsituationen, in denen keine befestigte Fahrbahn befahren wird, d. h. beispielsweise im so genannten Off-Road-Betrieb, kann es für den Fahrer wichtig sein, eine Anzeige des momentanen Lenkwinkels zu erhalten. Durch das erfindungsgemäße Verfahren wird vorteilhafterweise eine solche Anzeige durch das erste graphische Objekt bereitgestellt. Hierdurch wird die Sicherheit beim Führen des Fahrzeugs im Off-Road-Betrieb erhöht. Der Lenkwinkel wird dabei insbesondere durch ein Schwenken des von dem ersten Graphikobjekt visualisierten Fahrzeugrades dargestellt. Die visualisierte Schwenkbewegung entspricht dabei der realen Schwenkbewegung des lenkenden Fahrzeugrades. Auf diese Weise kann eine besonders realitätsnahe Visualisierung des Lenkwinkels bereitgestellt werden.

Gemäß einer Ausgestaltung des erfindungsgemäßen Verfahrens wird der momentane Lenkwinkel der Lenkung des Fahrzeugs aus einem Lenkungssteuergerät ausgelesen. Durch ein Lenkrad des Fahrzeugs wird ein Sollwert für den Lenkwinkel vorgegeben, welcher von dem Lenkungssteuergerät elektronisch erfasst wird. Dieser Sollwert kann aus dem Lenkungssteuergerät ausgelesen werden und als Vorgabe für das Erzeugen des ersten Graphikobjekts bei dem erfindungsgemäßen Verfahren verwendet werden. Vorteilhafterweise lässt sich der momentane Lenkwinkel hierdurch sehr einfach und kostengünstig gewinnen.

Gemäß einer Weiterbildung des erfindungsgemäßen Verfahrens wird ein zweites Graphikobjekt zur Darstellung einer Achse erzeugt und von der Anzeigevorrichtung angezeigt. Dabei sind unterschiedliche Lenkwinkel durch einen Winkel zwischen der Achse des zweiten Graphikobjekts und einer Drehachse des von dem ersten Graphikobjekt dargestellten Fahrzeugrads visualisiert. Vorteilhafterweise kann hierdurch eine noch realitätsnähere Darstellung des Lenkwinkels erzeugt werden.

Gemäß der Erfindung wird ein drittes Graphikobjekt mit einer Ringdarstellung und einer Markierung erzeugt und von der Anzeigevorrichtung angezeigt, wobei die Ringdarstellung das erste Graphikobjekt für das Fahrzeugrad zumindest teilweise umgibt und die Markierung den momentanen Lenkwinkel auf der Ringdarstellung anzeigt. Vorteilhafterweise wird hierdurch eine noch schneller erfassbare Darstellung des Lenkwinkels erzeugt.

Gemäß einer Weiterbildung des erfindungsgemäßen Verfahrens wird ein viertes Graphikobjekt mit einer Zahlendarstellung erzeugt und von der Anzeigevorrichtung angezeigt. In diesem Fall wird der Wert des Lenkwinkels des Fahrzeugrades mit der Zahlendarstellung angegeben. Es wird insbesondere der Lenkwinkel mittels einer Gradangabe benachbart zu der Markierung des dritten Graphikobjekts angezeigt. Vorteilhafterweise kann der Fahrer hierdurch den Lenkwinkel mit einem kurzen Blick auf die Anzeigevorrichtung schnell erfassen.

Gemäß einer anderen Ausbildung des erfindungsgemäßen Verfahrens wird der momentane Lenkwinkel der Lenkung des Fahrzeugs durch eine Kamera erfasst, welche das lenkende Fahrzeugrad des Fahrzeugs aufnimmt. In diesem Fall kann das erste Graphikobjekt eine Echtzeitwiedergabe der Aufnahme der Kamera sein. Unter einer Wiedergabe in Echtzeit wird in diesem Fall verstanden, dass sich keine oder nur eine sehr geringe Verzögerung zwischen der Aufnahme des Bildes und der Wiedergabe des Bildes durch die Anzeigevorrichtung ergibt. In diesem Fall bekommt der Fahrer vorteilhafterweise eine unmittelbare Darstellung der Schwenkposition des Fahrzeugrades, wodurch der Lenkwinkel angezeigt wird. Auch in diesem Fall kann zusätzlich das dritte und/oder vierte Graphikobjekt mit der Ringdarstellung, der Markierung bzw. der Zahlendarstellung des Lenkwinkels angezeigt werden. Die Anzeige dieser Graphikobjekte kann beispielsweise der Echtzeitwiedergabe der Aufnahme der Kamera überlagert werden. Hierdurch kann der Fahrer zum einen den Lenkwinkel sehr einfach wahrnehmen. Zum anderen bekommt er die tatsächliche Lenkposition des Fahrzeugrades realitätsnah angezeigt.

Gemäß der Erfindung sind für den Betrieb des Fahrzeugs verschiedene Betriebsmodi einstellbar. In einem ersten Betriebsmodus dieser verschiedenen Betriebsmodi werden verschiedene Betriebsparameter des Fahrzeugs für einen Off-Road-Betrieb eingestellt. Andere Betriebsmodi können beispielsweise eine Stadtfahrt, eine Autobahnfahrt oder eine sportliche Fahrweise betreffen. In dem ersten Betriebsmodus wird in diesem Fall in zumindest einem Teilbereich einer Anzeigefläche der Anzeigevorrichtung das erste Graphikobjekt angezeigt. Beispielsweise kann beim Umschalten in einen Off-Road-Betrieb des Fahrzeugs automatisch die Anzeige auf der Anzeigefläche so verändert werden, dass in einem Anzeigebereich der Lenkwinkel anhand des ersten Graphikobjekts visualisiert wird. Das erfindungsgemäße Anzeigesystem ist gekennzeichnet durch eine Graphikdatenerzeugungseinrichtung, die mit der Anzeigevorrichtung und der Lenkwinkelerfassungseinrichtung verbunden ist und mit der ein erstes Graphikobjekt zur Darstellung des lenkenden Fahrzeugrades erzeugt wird, wobei unterschiedliche Lenkwinkel in dem ersten Graphikobjekt unterscheidbar dargestellt werden. Ferner ist das Anzeigesystem gekennzeichnet durch eine Steuereinrichtung, die mit der Graphikdatenerzeugungseinrichtung verbunden ist und die ausgebildet ist, das erste Graphikobjekt mit einer dem erfassten momentanen Lenkwinkel entsprechenden Darstellung des lenkenden Fahrzeugrades auf der Anzeigevorrichtung anzuzeigen.

Das erfindungsgemäße Anzeigesystem ist insbesondere ausgebildet, das erfindungsgemäße Verfahren auszuführen. Es weist daher auch dieselben Vorteile wie das erfindungsgemäße Verfahren auf.

Gemäß einer Ausgestaltung des erfindungsgemäßen Anzeigesystems weist dieses eine Kamera auf, welche auf das lenkende Fahrzeugrad gerichtet ist und Bilder dieses Fahrzeugrades aufnimmt. Auf diese Weise können Echtzeitbilder des lenkenden Fahrzeugrades von der Anzeigevorrichtung wiedergegeben werden. Vorteilhafterweise kann der Fahrer hierdurch die tatsächliche Stellung des lenkenden Fahrzeugrades wahrnehmen.
- Figur 1: zeigt schematisch die Anordnung eines Ausführungsbeispiels des erfindungsgemäßen Anzeigesystems in einem Fahrzeug,
- Figur 2: zeigt den Aufbau eines Ausführungsbeispiels des erfindungsgemäßen Anzeigesystems,
- Figur 3: zeigt eine Anzeige auf der Anzeigefläche der Anzeigevorrichtung, die von einem Ausführungsbeispiel des erfindungsgemäßen Verfahrens erzeugt wird, und
- Figur 4: zeigt eine weitere Anzeige auf der Anzeigefläche der Anzeigevorrichtung, die von einem Ausführungsbeispiel des erfindungsgemäßen Verfahrens erzeugt wird.

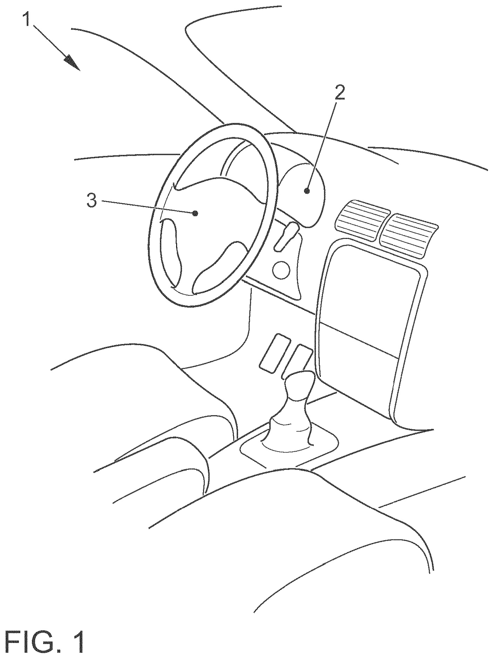

Figur 1 zeigt ein Beispiel einer Innenansicht eines Fahrzeugs 1. In dem Fahrzeug 1 ist hinter einem Lenkrad 3 eine als Kombiinstrument ausgebildete Anzeigevorrichtung 2 des erfindungsgemäßen Anzeigesystems angeordnet, deren Anzeige im Blickfeld bzw. in der Nähe des Blickfelds des Fahrers liegt.

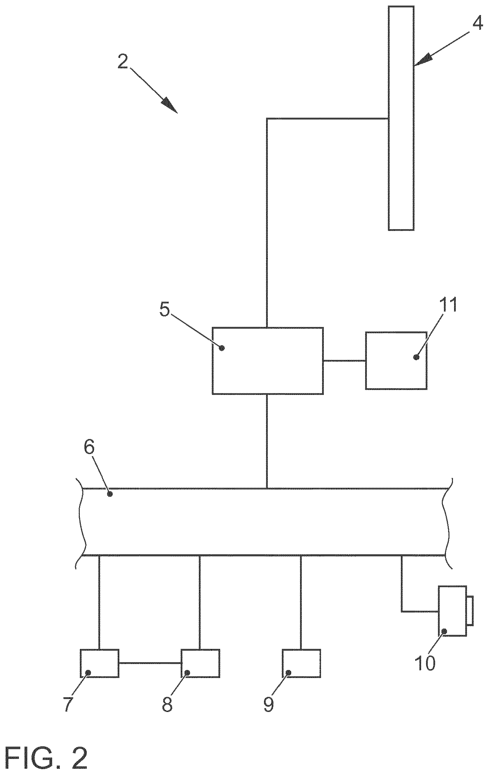

In Figur 2 ist der prinzipielle Aufbau des Anzeigesystems mit der Anzeigevorrichtung 2 dargestellt. Die Anzeigevorrichtung 2 umfasst eine Anzeigefläche 4, die von einem herkömmlichen Display bereitgestellt werden kann. Die Anzeigefläche 4 ist mit einer Steuereinrichtung 5 gekoppelt, die wiederum datentechnisch mit einem Datenbus 6 des Fahrzeugs 1 verbunden ist. Auf diese Weise können der Steuereinrichtung 5 Daten übertragen werden, aus denen die Steuereinrichtung Grafikdaten für die Anzeige auf der Anzeigefläche 4 generieren kann. Ferner kann die Steuereinrichtung 5 auch über andere Schnittstellen Daten empfangen. Beispielsweise kann die Steuereinrichtung 5 direkt mit Sensoren und Steuergeräten des Fahrzeugs 1 oder anderen Einrichtungen zur Erzeugung von Grafikdaten gekoppelt sein.

Das Fahrzeug 1 umfasst ferner verschiedene Steuergeräte, Sensoren und Erfassungseinrichtungen. Beim hier beschriebenen Ausführungsbeispiel umfasst das Anzeigesystem ein Lenkungssteuergerät 7, welches mit dem Datenbus 6 verbunden ist. Das Lenkungssteuergerät 7 erfasst den von dem Lenkrad 3 vorgegebenen Lenkwinkel. Dieser Lenkwinkel kann von einer Lenkwinkelerfassungseinrichtung 8 ausgelesen und über den Datenbus 6 an die Steuereinrichtung 5 übertragen werden.

Des Weiteren kann optional eine Kamera 9 von dem Anzeigesystem umfasst sein. Die Kamera 9 ist auf ein lenkendes Fahrzeugrad, beispielsweise auf das linke Vorderrad, gerichtet. Sie nimmt fortlaufend Bilder des lenkenden Fahrzeugrads auf, aus denen der Lenkwinkel ersichtlich ist. Diese Bilder werden über den Datenbus 6 an die Steuereinrichtung 5 übertragen.

Des Weiteren ist ein Bedienelement 10 vorgesehen, durch welches der Fahrer verschiedene Betriebsmodi des Fahrzeugs einstellen kann. Ein erster Betriebsmodus dieser Betriebsmodi ist ein so genannter Off-Road-Betrieb des Fahrzeugs 1. In diesem Fall werden automatisch verschiedene Betriebsparameter, zum Beispiel Fahrwerkseinstellungen, so eingestellt, dass sie an den Off-Road-Betrieb angepasst sind. Der ausgewählte Betriebsmodus wird auch über den Datenbus 6 an die Steuereinrichtung 5 übertragen.

Mit der Steuereinrichtung 5 ist des Weiteren eine Graphikdatenerzeugungseinrichtung 11 gekoppelt. Die Graphikdatenerzeugungseinrichtung 11 unterstützt die Steuereinrichtung 5 zur Erzeugung von Graphikobjekten, welche unterschiedliche Lenkwinkel visualisieren. Hierfür wird der Graphikdatenerzeugungseinrichtung 11 der von der Lenkwinkelerfassungseinrichtung 8 erfasste Lenkwinkel über die Steuereinrichtung 5 übertragen.

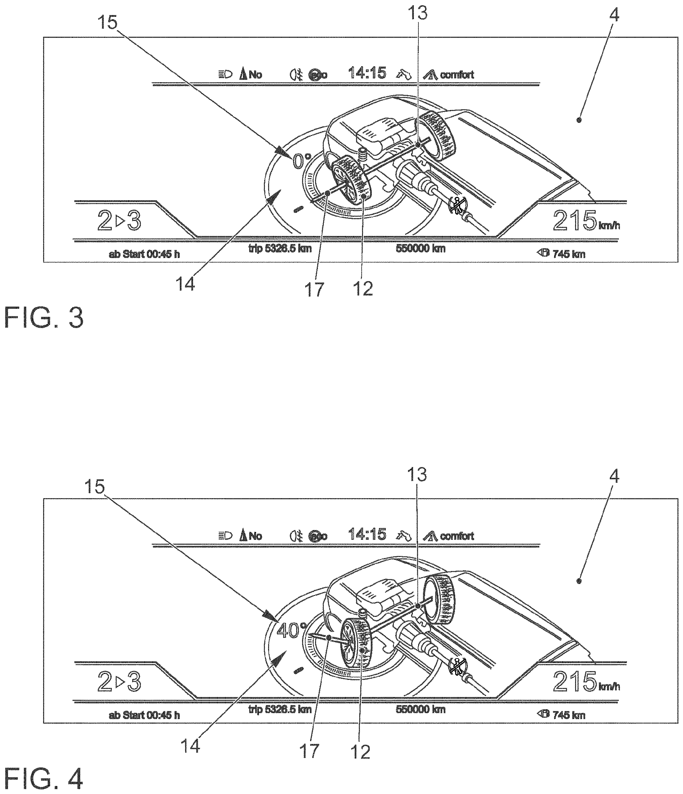

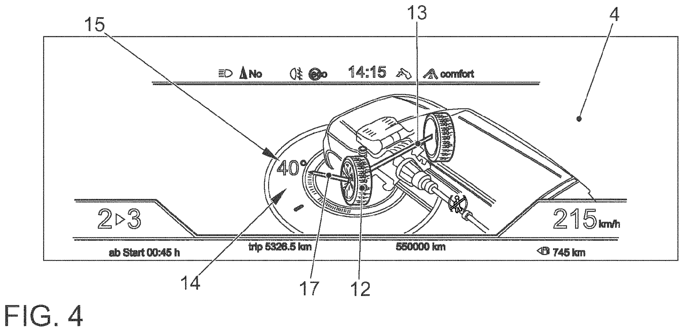

Im Folgenden wird ein Ausführungsbeispiel des erfindungsgemäßen Verfahrens anhand der Figuren 3 und 4 erläutert, wobei weitere Details und Ausgestaltungen des Ausführungsbeispiels des erfindungsgemäßen Anzeigesystems beschrieben werden:
Der Nutzer wählt mittels des Bedienelements 10 als Betriebsmodus für das Fahrzeug 1 den Off-Road-Betrieb aus. Diese Auswahl wird an die Steuereinrichtung 5 übertragen. Die Steuereinrichtung 5 verändert die Anzeige auf der Anzeigefläche 4 daraufhin so, dass in zumindest einem Teilbereich der Anzeigefläche 4 Informationen zum Lenkwinkel der lenkenden Fahrzeugräder angezeigt werden. Beispielsweise kann von einem ersten Anzeigemodus, bei dem auf der Anzeigefläche 4 Rundinstrumente dargestellt werden, zu einem Anzeigemodus gewechselt werden, bei dem keine Rundinstrumente mehr dargestellt werden und die Informationen der Rundinstrumente anhand von digitalen Zahlenwerten oder symbolischen Darstellungen verkleinert angezeigt werden. Eine solche Anzeige ist in den Figuren 3 und 4 gezeigt. Die Anzeigefläche 4 ist hierfür frei programmierbar, so dass die Anzeige auf der Anzeigefläche 4 frei von der Steuereinrichtung 5 erzeugt werden kann.

Das Lenkungssteuergerät 7 erfasst fortwährend den vom Lenkrad 3 vorgegebenen Lenkwinkel. Dieser Lenkwinkel wird von der Lenkwinkelerfassungseinrichtung 8 ausgelesen und über den Datenbus 6 an die Steuereinrichtung 5 übertragen. Die Steuereinrichtung 5 überträgt den erfassten Lenkwinkel wiederum an die Graphikdatenerzeugungseinrichtung 11. Die Graphikdatenerzeugungseinrichtung 11 erzeugt daraufhin verschiedene Graphikobjekte zur Darstellung auf der Anzeigefläche 4. Es wird ein erstes Graphikobjekt 12 zur Darstellung des lenkenden Fahrzeugrades erzeugt. Hierfür ist in der Graphikdatenerzeugungseinrichtung 11 eine graphische Darstellung eines Fahrzeugrades gespeichert. Die Graphikdatenerzeugungseinrichtung 11 erzeugt nun das erste Graphikobjekt 12 so, dass bei der Darstellung des lenkenden Fahrzeugrades der von der Steuereinrichtung 5 übertragene Lenkwinkel die Ausrichtung der Drehachse des dargestellten Fahrzeugrades dem tatsächlichen Lenkwinkel entspricht. Auf diese Weise können unterschiedliche Lenkwinkel in dem ersten Graphikobjekt 12 unterscheidbar dargestellt werden.

Des Weiteren erzeugt die Graphikdatenerzeugungseinrichtung 11 ein zweites Graphikobjekt 13 zur Darstellung einer Achse, mit welcher das lenkende Fahrzeugrad gekoppelt ist. Die unterschiedlichen Lenkwinkel werden dann durch einen Winkel zwischen dieser Achse des zweiten Graphikobjekts 13 und der Drehachse des von dem ersten Graphikobjekt 12 dargestellten Fahrzeugrades visualisiert. In Figur 3 ist die Anzeige auf der Anzeigefläche 4 wiedergegeben, wenn ein Lenkwinkel von 0° erfasst worden ist. Die Drehachse der Darstellung des lenkenden Fahrzeugrades in dem ersten Graphikobjekt 12 ist in diesem Fall parallel zu der Achse des zweiten Graphikobjekts 13. In Figur 4 ist hingegen die Anzeige auf der Anzeigefläche 4 dargestellt, wenn ein Lenkwinkel von 40° erfasst worden ist. Die Darstellung des lenkenden Fahrzeugrades des ersten Graphikobjekts 12 ist in diesem Fall hinsichtlich der Drehachse verschwenkt zu der Achse des zweiten Graphikobjekts 13 dargestellt. Durch die Ausrichtung der Darstellung des lenkenden Fahrzeugrades in dem ersten Graphikobjekt 12 kann somit der Lenkwinkel anschaulich und realitätsnah erfasst werden. In den Darstellungen der Figuren 3 und 4 wird der Lenkwinkel nur anhand einer Darstellung des vorderen linken Fahrzeugrades visualisiert. Auf gleiche Weise könnte jedoch auch die Darstellung des vorderen rechten lenkenden Fahrzeugrades zusätzlich den Lenkwinkel darstellen, in dem auch die Darstellung dieses Fahrzeugrades verschwenkt wird, wenn ein Lenkwinkel erfasst wird.

Des Weiteren wird von der Lenkwinkelerfassungseinrichtung 8 ein drittes Graphikobjekt 14 mit einer Ringdarstellung 16 und einer Markierung 17 erzeugt. Die Ringdarstellung 16 umgibt das erste Graphikobjekt 12 für das Fahrzeugrad zumindest teilweise. Die Markierung 17 zeigt den momentanen Lenkwinkel, wie er der Graphikdatenerzeugungseinrichtung 11 von der Steuereinrichtung 5 übertragen worden ist, auf der Ringdarstellung 16 an. Die Ausrichtung der Markierung 17 entspricht dabei im Wesentlichen der Ausrichtung der Drehachse der Darstellung des Fahrzeugrades.

Ferner kann von der Graphikdatenerzeugungseinrichtung 11 ein viertes Graphikobjekt 15 mit einer Zahlendarstellung für den Wert des Lenkwinkels des Fahrzeugrades erzeugt werden.

Die Graphikdaten für die von der Graphikdatenerzeugungseinrichtung 11 erzeugten Graphikobjekte werden an die Steuereinrichtung 5 übertragen, welche sie an die Anzeigefläche 4 überträgt, wo sie wie in den Figuren 3 und 4 dargestellt, wiedergegeben werden. Der erfasste momentane Lenkwinkel wird somit sehr anschaulich auf der Anzeigefläche 4 insbesondere mittels des ersten Graphikobjekts 12 dargestellt.

Im Folgenden wird eine Weiterbildung des zuvor beschriebenen Ausführungsbeispiels erläutert:
Bei dieser Weiterbildung umfasst das Anzeigesystem die Kamera 9, welche ein lenkendes Fahrzeugrad aufnimmt. Die Daten der aufgenommenen Bilder werden von der Steuereinrichtung 5 an die Graphikdatenerzeugungseinrichtung 11 übertragen. Die Graphikdatenerzeugungseinrichtung 11 verarbeitet die übertragenen Bilder in Echtzeit und überlagert diesen das dritte und vierte Graphikobjekt. Dabei wird der momentane Lenkwinkel erneut über die Lenkwinkelerfassungseinrichtung 8 erfasst. Alternativ kann die Steuereinrichtung 5 durch eine Bildverarbeitung den Lenkwinkel aus der Stellung des lenkenden Fahrzeugrades, wie es von der Kamera 9 erfasst worden ist, erzeugen und an die Graphikdatenerzeugungseinrichtung 11 übertragen.

Die Graphikdatenerzeugungseinrichtung 11 überlagert das dritte und vierte Graphikobjekt 14, 15 der Aufnahme der Kamera 9 derart, dass die Ringdarstellung 16 das lenkende Fahrzeugrad in der Aufnahme umgibt und die Markierung 17 die Ausrichtung der Drehachse des aufgenommenen Fahrzeugrades wiedergibt. Diese Überlagerung wird von der Graphikdatenerzeugungseinrichtung 11 an die Steuereinrichtung 5 übertragen, welche sie an die Anzeigefläche 4 weitergibt. Auf dieser erfolgt eine Echtzeitwiedergabe der Aufnahme der Kamera 9, überlagert von den Graphikobjekten 14 und 15.

### Bezugszeichenliste

- 1: Fahrzeug
- 2: Anzeigevorrichtung
- 3: Lenkrad
- 4: Anzeigefläche
- 5: Steuereinrichtung
- 6: Datenbus
- 7: Lenkungssteuergerät
- 8: Lenkwinkelerfassungseinrichtung
- 9: Kamera
- 10: Bedienelement
- 11: Graphikdatenerzeugungseinrichtung
- 12: erstes Graphikobjekt
- 13: zweites Graphikobjekt
- 14: drittes Graphikobjekt
- 15: viertes Graphikobjekt
- 16: Ringdarstellung
- 17: Markierung

## Patentansprüche

1. Verfahren zum Anzeigen von den Betrieb eines Fahrzeugs (1) betreffende Informationen mittels einer Anzeigevorrichtung (2) in dem Fahrzeug (1), das eine Lenkung umfasst, welche einen Lenkwinkel von zumindest einem lenkenden Fahrzeugrad steuert, bei dem
der momentane Lenkwinkel der Lenkung des Fahrzeugs (1) erfasst wird, für den Betrieb des Fahrzeugs (1) verschiedene Betriebsmodi einstellbar sind,
wobei in einem ersten Betriebsmodus der verschiedenen Betriebsmodi verschiedene Betriebsparameter des Fahrzeugs (1) für einen off-road-Betrieb eingestellt werden, und im ersten Betriebsmodus in zumindest einem Teilbereich einer Anzeigefläche (4) der Anzeigevorrichtung (2) ein erstes Graphikobjekt (12) zur Darstellung des lenkenden Fahrzeugrades erzeugt wird, wobei unterschiedliche Lenkwinkel im ersten Graphikobjekt (12) unterscheidbar dargestellt werden, und
das erste Graphikobjekt (12) mit einer dem erfassten momentanen Lenkwinkel entsprechenden Darstellung des lenkenden Fahrzeugrades von der Anzeigevorrichtung (2) angezeigt wird,
**dadurch gekennzeichnet, dass**
ein zusätzliches Graphikobjekt (14) mit einer Ringdarstellung (16) und einer Markierung (17) erzeugt und von der Anzeigevorrichtung (2) angezeigt wird,
wobei die Ringdarstellung (16) das erste Graphikobjekt (12) für das Fahrzeugrad zumindest teilweise umgibt und die Markierung (17) den momentanen Lenkwinkel auf der Ringdarstellung (16) dadurch anzeigt, dass die Ausrichtung der Markierung (17) der Ausrichtung der Drehachse der Darstellung des Fahrzeugrades entspricht.

2. Verfahren nach Anspruch 1,
**dadurch gekennzeichnet, dass**
der momentane Lenkwinkel der Lenkung des Fahrzeugs (1) aus einem Lenkungssteuergerät (7) ausgelesen wird.

3. Verfahren nach Anspruch 1 oder 2,
**dadurch gekennzeichnet, dass**
ein weiteres Graphikobjekt (13) zur Darstellung einer Achse erzeugt und von der Anzeigevorrichtung (2) angezeigt wird, wobei unterschiedliche Lenkwinkel durch einen Winkel zwischen der Achse des weiteren Graphikobjekts (13) und einer Drehachse des von dem ersten Graphikobjekt (12) dargestellten Fahrzeugrads visualisiert sind.

4. Verfahren nach einem der vorhergehenden Ansprüche,
**dadurch gekennzeichnet, dass**
ein viertes Graphikobjekt (15) mit einer Zahlendarstellung erzeugt und von der Anzeigevorrichtung (2) angezeigt wird, wobei der Wert des Lenkwinkels des Fahrzeugrads mittels der Zahlendarstellung angegeben wird.

5. Verfahren nach einem der vorhergehenden Ansprüche,
**dadurch gekennzeichnet, dass**
der momentane Lenkwinkel der Lenkung des Fahrzeugs (1) durch eine Kamera (9) erfasst wird, welche das lenkendes Fahrzeugrad des Fahrzeugs (1) aufnimmt.

6. Verfahren nach Anspruch 5,
**dadurch gekennzeichnet, dass**
das erste Graphikobjekt (12) eine Echtzeitwiedergabe der Aufnahme der Kamera (9) ist.

7. Anzeigesystem zum Anzeigen von den Betrieb eines Fahrzeugs (1) betreffende Informationen (1), wobei das Fahrzeug (1) eine Lenkung umfasst, welche einen Lenkwinkel von zumindest einem lenkenden Fahrzeugrad steuert, wobei für den Betrieb des Fahrzeugs (1) verschiedene Betriebsmodi einstellbar sind, wobei in einem ersten Betriebsmodus der verschiedenen Betriebsmodi verschiedene Betriebsparameter des Fahrzeugs (1) für einen off-road-Betrieb eingestellt werden, mit
einer Anzeigevorrichtung (2),
einer Lenkwinkelerfassungseinrichtung (8) zum Erfassen des momentanen Lenkwinkels der Lenkung des Fahrzeugs (1),
einer Graphikdatenerzeugungseinrichtung (11), die mit der Anzeigevorrichtung (2) und der Lenkwinkelerfassungseinrichtung (8) verbunden ist und mit der im ersten Betriebsmodus in zumindest einem Teilbereich einer Anzeigefläche (4) der Anzeigevorrichtung (2) ein erstes Graphikobjekt (12) zur Darstellung des lenkenden Fahrzeugrades erzeugt wird, wobei unterschiedliche Lenkwinkel in dem ersten Graphikobjekt (12) unterscheidbar dargestellt werden, und
einer Steuereinrichtung (5), die mit der Graphikdatenerzeugungseinrichtung (11) verbunden ist und die ausgebildet ist, das erste Graphikobjekt (12) mit einer dem erfassten momentanen Lenkwinkel entsprechenden Darstellung des lenkenden Fahrzeugrades auf der Anzeigevorrichtung (2) anzuzeigen,
**dadurch gekennzeichnet, dass**
die Graphikdatenerzeugungseinrichtung (11) ausgebildet ist, ein zusätzliches Graphikobjekt (14) mit einer Ringdarstellung (16) und einer Markierung (17) für eine Anzeige auf der Anzeigevorrichtung (2) zu erzeugen, wobei die Ringdarstellung (16) das erste Graphikobjekt (12) für das Fahrzeugrad zumindest teilweise umgibt, und
die Steuereinrichtung (5) so ausgebildet ist, dass die Markierung (17) auf der Anzeigevorrichtung (2) den momentanen Lenkwinkel auf der Ringdarstellung (16) so anzeigt, dass die Ausrichtung der Markierung (17) der Ausrichtung der Drehachse der Darstellung des Fahrzeugrades entspricht.

8. Anzeigesystem nach Anspruch 7,
**dadurch gekennzeichnet, dass**
das Anzeigesystem eine Kamera (9) aufweist, welche auf das lenkende Fahrzeugrad gerichtet ist und Bilder dieses Fahrzeugrads aufnimmt.

## Claims

1. Method for displaying information relating to the operation of a vehicle (1) by way of a display device (2) in the vehicle (1), which comprises a steering system that controls a steering angle of at least one steered vehicle wheel, in which
the current steering angle of the steering system of the vehicle (1) is detected,
different operating modes are able to be set for the operation of the vehicle (1), wherein, in a first operating mode of the different operating modes, different operating parameters of the vehicle (1) are set for off-road operation, and, in the first operating mode, a first graphical object (12) for depicting the steered vehicle wheel is generated in at least one subregion of a display surface (4) of the display device (2), wherein different steering angles are depicted in a manner able to be distinguished between in the first graphical object (12), and
the first graphical object (12) is displayed by the display device (2) with a depiction of the steered vehicle wheel corresponding to the detected current steering angle,
**characterized in that**
an additional graphical object (14) with a circular depiction (16) and a marker (17) is generated and displayed by the display device (2),
wherein the circular depiction (16) at least partially surrounds the first graphical object (12) for the vehicle wheel and the marker (17) indicates the current steering angle on the circular depiction (16) by virtue of the orientation of the marker (17) corresponding to the orientation of the axis of rotation of the depiction of the vehicle wheel.

2. Method according to Claim 1,
**characterized in that**
the current steering angle of the steering system of the vehicle (1) is read from a steering system controller (7).

3. Method according to Claim 1 or 2,
**characterized in that**
a further graphical object (13) for depicting an axle is generated and displayed by the display device (2), wherein different steering angles are visualized by an angle between the axle of the further graphical object (13) and an axis of rotation of the vehicle wheel depicted by the first graphical object (12).

4. Method according to one of the preceding claims,
**characterized in that**
a fourth graphical object (15) with a depiction of numbers is generated and displayed by the display device (2), wherein the value of the steering angle of the vehicle wheel is given by way of the depiction of numbers.

5. Method according to one of the preceding claims,
**characterized in that**
the current steering angle of the steering system of the vehicle (1) is detected by a camera (9) that records the steered vehicle wheel of the vehicle (1).

6. Method according to Claim 5,
**characterized in that**
the first graphical object (12) is a real-time reproduction of the recording from the camera (9).

7. Display system for displaying information (1) relating to the operation of a vehicle (1), wherein the vehicle (1) comprises a steering system that controls a steering angle of at least one steered vehicle wheel, wherein different operating modes are able to be set for the operation of the vehicle (1), wherein, in a first operating mode of the different operating modes, different operating parameters of the vehicle (1) are set for off-road operation, having
a display device (2),
a steering angle detection apparatus (8) for detecting the current steering angle of the steering system of the vehicle (1),
a graphical data generation apparatus (11) that is connected to the display device (2) and the steering angle detection apparatus (8) and by way of which, in the first operating mode, a first graphical object (12) for depicting the steered vehicle wheel is generated in at least one subregion of a display surface (4) of the display device (2), wherein different steering angles are depicted in a manner able to be distinguished between in the first graphical object (12), and
a control apparatus (5) that is connected to the graphical data generation apparatus (11) and that is designed to display the first graphical object (12) on the display device (2) with a depiction of the steered vehicle wheel corresponding to the detected current steering angle,
**characterized in that**
the graphical data generation apparatus (11) is designed to generate an additional graphical object (14) with a circular depiction (16) and a marker (17) for a display on the display device (2), wherein the circular depiction (16) at least partially surrounds the first graphical object (12) for the vehicle wheel, and
the control apparatus (5) is designed such that the marker (17) on the display device (2) indicates the current steering angle on the circular depiction (16) such that the orientation of the marker (17) corresponds to the orientation of the axis of rotation of the depiction of the vehicle wheel.

8. Display system according to Claim 7,
**characterized in that**
the display system has a camera (9) that is oriented towards the steered vehicle wheel and records images of this vehicle wheel.

## Revendications

1. Procédé permettant d'afficher des informations concernant le fonctionnement d'un véhicule (1) au moyen d'un dispositif d'affichage (2) dans le véhicule (1) qui comprend un système de direction qui commande un angle de braquage d'au moins une roue de véhicule directrice, dans lequel
l'angle de braquage instantané du système de direction du véhicule (1) est détecté,
différents modes de fonctionnement sont réglables pour le fonctionnement du véhicule (1), dans lequel, dans un premier mode de fonctionnement des différents modes de fonctionnement, différents paramètres de fonctionnement du véhicule (1) sont réglés pour un fonctionnement tout terrain, et dans le premier mode de fonctionnement, dans au moins une zone partielle d'une surface d'affichage (4) du dispositif d'affichage (2), un premier objet graphique (12) pour représenter la roue de véhicule directrice est généré, différents angles de braquage étant représentés de manière distincte dans le premier objet graphique (12), et
le premier objet graphique (12) avec une représentation correspondant à l'angle de braquage instantané détecté de la roue de véhicule directrice est affiché par le dispositif d'affichage (2),
**caractérisé en ce qu'**un objet graphique supplémentaire (14) avec une représentation annulaire (16) et un marquage (17) est généré et affiché par le dispositif d'affichage (2),
la représentation annulaire (16) entourant au moins en partie le premier objet graphique (12) pour la roue de véhicule, et le marquage (17) indique l'angle de braquage instantané sur la représentation annulaire (16) **en ce que** l'orientation du marquage (17) correspond à l'orientation de l'axe de rotation de la représentation de la roue de véhicule.

2. Procédé selon la revendication 1, **caractérisé en ce que** l'angle de braquage instantané du système de direction du véhicule (1) est lu à partir d'un appareil de commande de direction (7).

3. Procédé selon la revendication 1 ou 2, **caractérisé en ce qu'**un autre objet graphique (13) pour représenter un axe est généré et affiché par le dispositif d'affichage (2), différents angles de braquage étant visualisés par un angle entre l'axe de l'autre objet graphique (13) et un axe de rotation de la roue de véhicule représentée par le premier objet graphique (12) .

4. Procédé selon l'une quelconque des revendications précédentes, **caractérisé en ce qu'**un quatrième objet graphique (15) avec une représentation numérique est généré et affiché par le dispositif d'affichage (2), la valeur de l'angle de braquage de la roue de véhicule étant indiquée au moyen de la représentation numérique.

5. Procédé selon l'une quelconque des revendications précédentes, **caractérisé en ce que** l'angle de braquage instantané du système de direction du véhicule (1) est détecté par une caméra (9) qui enregistre la roue de véhicule directrice du véhicule (1).

6. Procédé selon la revendication 5, **caractérisé en ce que** le premier objet graphique (12) est une reproduction en temps réel de l'enregistrement de la caméra (9).

7. Système d'affichage permettant d'afficher des informations (1) concernant le fonctionnement d'un véhicule (1), le véhicule (1) comprenant un système de direction qui commande un angle de braquage d'au moins une roue de véhicule directrice, différents modes de fonctionnement étant réglables pour le fonctionnement du véhicule (1), dans lequel, dans un premier mode de fonctionnement des différents modes de fonctionnement, différents paramètres de fonctionnement du véhicule (1) sont réglés pour un fonctionnement tout terrain, comprenant
un dispositif d'affichage (2),
un équipement de détection d'angle de braquage (8) pour détecter l'angle de braquage instantané du système de direction du véhicule (1),
un équipement de génération de données graphiques (11) qui est relié au dispositif d'affichage (2) et à l'équipement de détection d'angle de braquage (8) et par lequel, dans le premier mode de fonctionnement, dans au moins une zone partielle d'une surface d'affichage (4) du dispositif d'affichage (2), un premier objet graphique (12) pour représenter la roue de véhicule directrice est généré, différents angles de braquage étant représentés de manière distincte dans le premier objet graphique (12), et
un équipement de commande (5) qui est relié à l'équipement de génération de données graphiques (11) et qui est réalisé pour afficher sur le dispositif d'affichage (2) le premier objet graphique (12) avec une représentation correspondant à l'angle de braquage instantané détecté de la roue de véhicule directrice,
**caractérisé en ce que**
l'équipement de génération de données graphiques (11) est réalisé pour générer un objet graphique supplémentaire (14) avec une représentation annulaire (16) et un marquage (17) pour un affichage sur le dispositif d'affichage (2), la représentation annulaire (16) entourant au moins en partie le premier objet graphique (12) pour la roue de véhicule, et
l'équipement de commande (5) est réalisé de telle sorte que le marquage (17) indique sur le dispositif d'affichage (2) l'angle de braquage instantané sur la représentation annulaire (16) de telle sorte que l'orientation du marquage (17) correspond à l'orientation de l'axe de rotation de la représentation de la roue de véhicule.

8. Système d'affichage selon la revendication 7, **caractérisé en ce que** le système d'affichage présente une caméra (9) qui est dirigée sur la roue de véhicule directrice et enregistre des images de cette roue de véhicule.
